# EUROPEAN PATENT APPLICATION

(11) **EP 0 958 736 A1**
(43) Date of publication of application: **24.11.1999**
(21) Application number: 98201550.5
(22) Date of filing: 12.05.1998
(51) Int. Cl.: A01G 9/02

(54) **Assembly of stacked plant containers**

(71) Applicant: Garden Systems in 't kort GARSY, 2390 Malle (BE)
(72) Inventor: Van Roey, Herman, 2310 Rijkevorsel (BE)
(74) Representative: Pieraerts, Jacques

(57) **Abstract**

This invention concerns an assembly of a first and a second container (1,10) for manufacturing a plant composition, whereby the first container (1) comprises a first inner space (8) for receiving growth medium for plants, which first inner space (8) is enclosed by a first wall (2) with a first upper edge (5) for defining a first upper side (3) and a first lower edge (6) for defining a first bottom (4), which second container (10) comprises a second inner space for receiving growth medium for plants, which second inner space is enclosed by a second wall (12) with a second upper edge (15) for defining a second upper side (13) and a second lower edge (16) for defining a second bottom (14), whereby the second bottom (14) has a smaller surface area than the first upper side (3), and the second container (10) is provided to be placed with respect to the first container (1) in such a way, that the second upper side (13) of the second container (10) is located above the first upper side (3) of the first container (1), and the second bottom (14) of the second container (10) is enclosed by the first wall (2) of the first container (1), and a portion of the first upper side (3) which is located between the first (2) and the second wall (12), is open along the first upper edge (5).

## Description

This invention concerns an assembly for manufacturing a plant composition as described in the preamble of the first claim.

It is the wish of many gardeners to have in their garden one or more striking, large trees, bushes or plants, as an ornamental element for the garden. Mostly, young, comparatively small plants are bought and planted, which subsequently may be cultivated into full-grown plants. Full-grown plants are namely mostly rather expensive to purchase. In addition, upon transplanting a grown plant, there is a risk that the plant cannot adapt to the new conditions and dies off. Depending on the type of plant, it may moreover take a few to many years before the small plant has developed into to a large, full-grown plant.

It is the aim of this invention to provide a solution for this problem, namely to provide an assembly allowing to obtain large plants in a quick and simple way.

This is achieved according to the invention with the measures described in the characterising part of the first claim.

The inner space of the first and second containers are provided for receiving a growth medium for plants. This may for example be leaf mould, or any other growth medium known to the man skilled in the art. The second container is provided to be applied in such a way with respect to the first container, that the second bottom of the second container is situated in the inner space of the first container and the second upper side of the second container is situated above the upper side of the first container. It is also possible that the second bottom of the second container coincides with the first upper side of the first container. Because the second bottom of the upper second container has a smaller surface area than the first upper side of the lower first container, space remains between the first wall of the first container and the second wall of the second container for receiving plants.

Thereby the containers are positioned in such a way with respect to each other, that between the walls of the first and second container space remains for receiving plants, along the entire first upper edge.

Because the second, upper container may be completely surrounded by plants, and because the plants may be planted in the growth medium, they are able to grow further after being planted in the assembly. After some time, the assembly will even not be observable any more from the outside. By applying a plurality of such assemblies in the height direction into each other, a plant of the desired height may be devised as from the start. With the assembly of this invention it is consequently possible to obtain a plant of the desired size as from the start, independent of the nature and growth rate of the plant.

Such an assembly is particularly suitable for plants which show a slow growth. In spite of the slow growth of the plant, it is possible according to the invention to obtain nevertheless a large plant in a comparatively short time. Such an assembly is also particularly suitable for plants of which the growth is limited in height or of which the lateral growth is limited, which do not or hardly grow further when they have reached a certain size. With the assembly of this invention, large plants may be devised, independent of the nature and growth characteristics of the plant.

Such an assembly moreover offers the advantage of being movable. The containers, after having been set up, may be removed one after the other, and set up at another site, without thereby causing damage to the plants.

The man skilled in the art of the cultivation of plants, desiring to obtain full-grown plants in an accelerated way, has up to now always been searching to influence the growth of the plant in itself. In the field of cultivation of plants, it is customary to search thereto for nutriments and auxins, which are capable of favourably influencing the growth process of the plant, or to develop and cultivate other plant species, which for example show an increased growth rate, or grow further to the desired size. In spite of the presence of plant trays in all kinds of shapes and materials, the man skilled in the art has not yet got round to combine containers in such a way as to obtain a construction in which plants may be combined in such a way, as to give the impression that full grown plants are concerned, irrespective of the nature, growth characteristics and size of the plant.

The first and second bottoms preferably have a smaller surface area than the first and second upper sides respectively, in order to facilitate accessibility to the open space between the first upper edge of the first container and the second wall of the second container.

In the inner space of the first container, preferably means are provided for supporting the second container. These means are preferably connected to the wall of the first container. This allows to first fit the required number of containers one on top of the other, and to apply only afterwards a filling of growth medium and/or plants, and simultaneously obtain a reinforced construction.

The means for supporting the second container preferably comprise a vertical separation wall provided in the first container. A separation wall which connects the opposite parts of the wall, provides extra strength to the container, and increases the ability of the container to retain its shape. Because of the relatively large weight of the growth medium and the plants, the pressure experienced by the lower container from a second container placed on top of it, may be considerably high, and may give rise to a sagging of the shape of the lower container, or cause an undesirable deformation. This is particularly important when a large number of containers are stacked onto each other.

The separation wall is preferably removably connectable to the wall, in order to facilitate the transport and storage of the assembly.

The first and second containers are preferably provided with a coupling sleeve. This allows an improved positioning of the containers with respect to each other. If so desired, the coupling sleeve may be provided with means to connect two coupling sleeves placed the one on top of the other. This allows to obtain a strengthened construction. This may be particularly important in larger constructions, the weight of which may rather build up.

In order to allow that the construction may be irrigated from the inside, the coupling sleeve is preferably hollow, and the wall of the coupling sleeve is provided with perforations to irrigate the container from the inside. The coupling sleeve preferably has an upper side and bottom which are substantially open. In that case, the coupling sleeve of containers placed on top of each other form a hollow space, extending in the height direction of the assembly, for example to receive a tube for the further strengthening of the construction.

The coupling sleeve is preferably removably connectable to the separation wall, in order to facilitate the transport of the assembly.

Preferably, the bottom of the second container and the upper side of the first container are almost completely open. In this way, the inner space of the upper second container is substantially continuously passing into the inner space of the lower first container. This allows the plant roots which are in the second container, to grow further into the first container. With such an extensive growth of roots, strong, healthy plants may be obtained. Simultaneously, nutriments which are delivered via the upper container, may flow through the bottom of the upper container to the containers underneath, so that in principle it suffices to deliver nutriments via one container.

The invention also concerns a container as part of an assembly as is described above.

The invention is further elucidated by means of the attached figures and description of the figures.
Figure 1 shows a view on the container according to the invention.
Figure 2 shows a cross section of an assembly according to the invention.
Figure 3 shows a view on an assembly of containers having the same size.
Figure 4 shows a view on an assembly of containers of which the size is diminishing in the height direction.

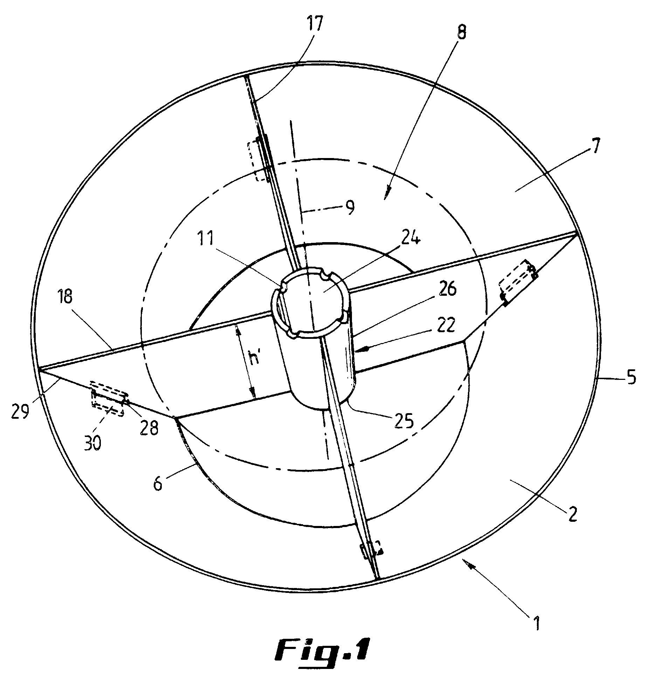

The embodiment of a container 1 according to the invention, shown in figure 1, comprises a wall 2 which encloses an inner space 8. The inner space 8 has a vertical axis 9. The container 1 has an upper side 3, which is enclosed by an upper edge 5, and a bottom 4 which is enclosed by a lower edge 6. The upper side 3 and/or the bottom 4 may be completely or only partially open, but are preferably substantially completely open. If the upper side is only partially open, the upper side comprises along the upper edge 5 an open edge 7 (shown in dotted line). Thereby, the bottom 4 may have a surface area which is smaller, bigger or equal to the surface area of the upper side 3. The bottom 4 preferably has a smaller surface area than the upper side 3. The wall 2 preferably is bevelled from the upper side 3 in the direction of the bottom 4.

The container 1 may have any desired shape. The upper side 3 and the bottom 4 may have a same or a different shape. The upper side 3 and the bottom 4 may for example be oval, or have the shape of a circle, a square, or a rectangle, or any other desirable shape. The container 1 shown in figure 1 has the shape of an inverted truncate cone.

The container according to the invention may be manufactured from various, generally known materials, for example metal, for example aluminium, zinc, plastic material, concrete, wood.

The dimensions of the container 1, in particular the height of the wall 2 and the dimensions of the upper side 3 and the bottom 4 may be varied within broad limits, for example depending on the desired size of the construction and the nature and size of the plants to be expected.

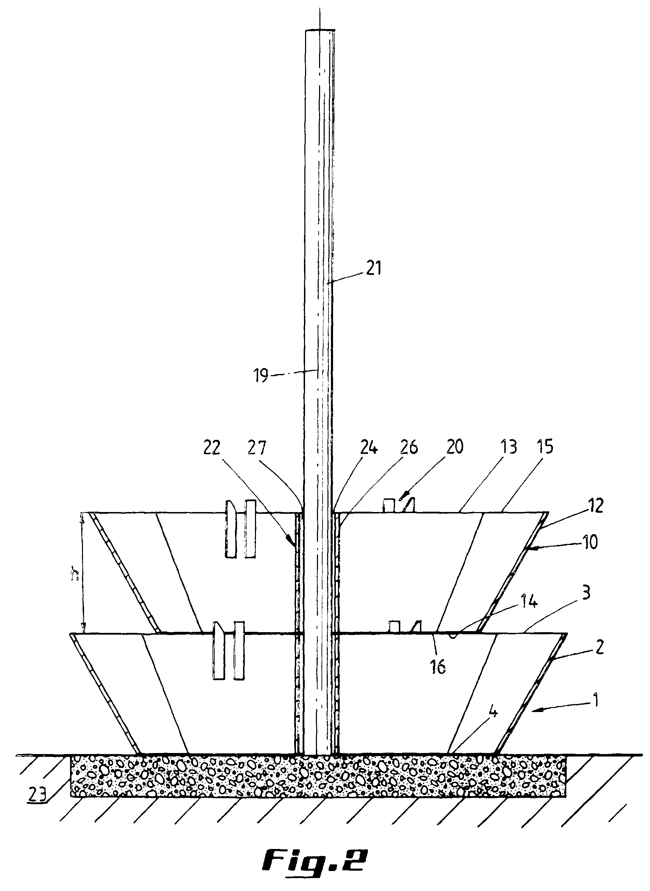

The assembly shown in figure 2 comprises a first lower container 1, and a second upper container 10. The second container 10 may be fitted partially in the inner space 8 of the first container 1. In the embodiment shown in figure 2 the bottom 14 of the upper container 10 and the upper side 3 of the lower container 1 coincide. If so desired, the bottom 14 of the upper container 10 may be shifted more in the direction of the inner space of the lower container 1.

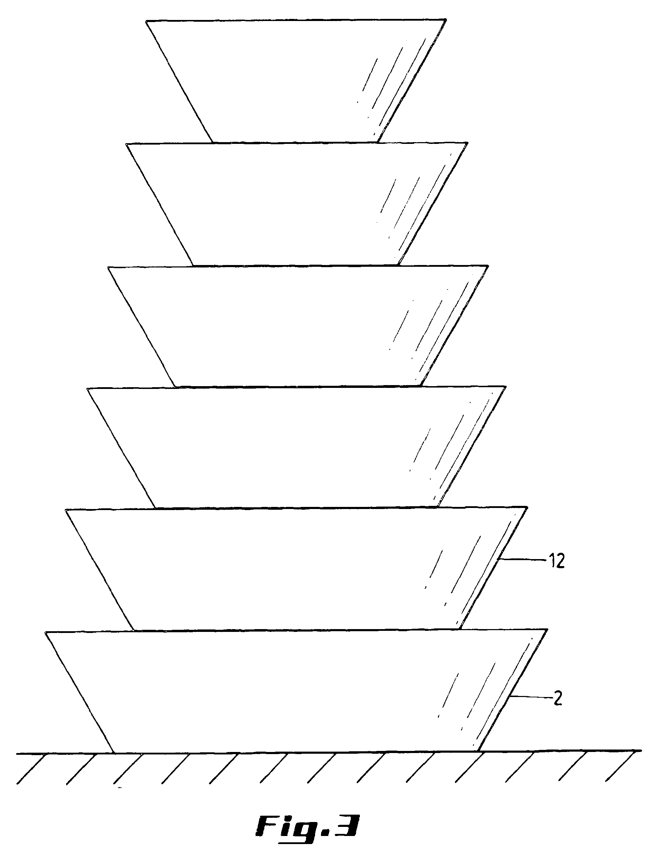

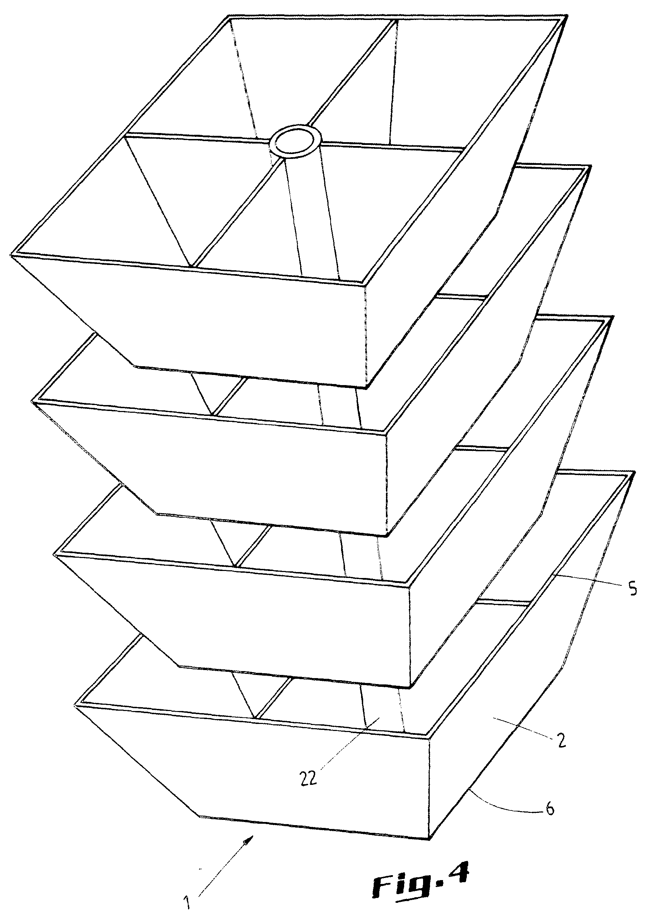

As is shown in figures 3 and 4, it is possible to combine several of the above assemblies. In the embodiments shown in figures 3 and 4, respectively six and four containers, thus three and two assemblies are fitted on top of each other. Thereby, in the embodiments shown in figures 2, 3 and 4, the walls 2, 12 of containers 1, 10 fitted on top of each other, run substantially parallel to each other. It is also possible that the walls of an upper container are more or less inclined than the walls of a container underneath it. This may for example apply if one wishes to create an assembly with a particular shape, or if one wishes to put plants of different sizes in the successive containers, and more or less space is required thereto.

The bottom 14 of the second container 10 may be completely or only partially open, and is preferably substantially completely open. The upper side 3 of the first container 1 may also be completely or only partially open, and is preferably substantially completely open. Through this, the inner space of the upper second container 10 is substantially continuously passing into the inner space of the lower first container 1. This allows that the roots of plants which are in the second container 10 may grow further into the first container 1. With such and extensive growth of roots, strong, healthy plants may be obtained. Simultaneously, nutriments which are delivered via the second container 10, may flow through the bottom 14 of the second upper container 10 to the first container 1 underneath, so that in principle it suffices to deliver the nutriments via one container.

The first container 1 preferably also comprises means 17, 18, 20 to support a second container 10 fitted in or on the first container 1. The means for supporting the container may be generally known means, and preferably comprise a separation wall 17. The separation wall 17 may for example connect two opposite portions of the wall 2, 12 to each other If so desired, a second separation wall 18, and optionally further separation walls may be applied. The second separation wall may for example be applied perpendicularly to the first separation wall 17. By the presence of such separation walls 17, 18 the ability of the containers to retain their shape will be increased.

If so desired, additional means may be provided in or on the separation walls 17, 18, allowing an improved positioning of the containers with respect to each other. In the separation wall 17, 18 for example recesses or attachments 20 may be provided to receive the wall 12 of the upper container. The height h' of the separation wall 17, 18 may be equal to the height h of the wall of the container 1, 10. In that case, the upper side 3 of the first container 1 and the bottom 14 of the second container 10 substantially coincide. The height h' of the separation wall 17, 18 may also be smaller than the height h of the wall of the container 1, 10. In that case, the second container 10 is partially located in the first container, and the second bottom 14 of the second container 10 is located in the inner space 8 of the first container 1.

The separation wall 17, 18 may be connected over its entire height with the wall 2, 12 of the container 1, 10, in order to obtain an optimal distribution of the pressure which is exerted by an upper container 10 on a container 1 underneath it.

It is also possible to connect the separation wall 17, 18 only in well-defined sites, preferably removably, with the wall 2, 12. Thereto, the separation wall 17, 18 and the wall 2, 12 are provided with means generally known to the man skilled in the art. These means comprise for example one or more perforations 28 applied in the wall 2, 12, and lips 30 applied to the side 29 of the separation wall 17, 18, intermating with these perforations 28. Such a removable connection of the separation wall 17, 18 with the wall 2, 12 allows to facilitate the transport and the storage of the assembly.

The separation wall 17, 18 is preferably connected to a coupling sleeve 22, for connecting the first and second container 1, 10. This allows to increase the strength of an assembly of several containers fitted on top of each other. The coupling sleeve 22 may be fitted centrally in the container, or in any other desired position. The coupling sleeve 22 may for example be fitted axially or eccentrically. The separation wall 17, 18 may be connected permanently with the coupling sleeve 22, or removably, in order to facilitate the transport and storage of the containers and the assembly. Thereto, the coupling sleeve 22 and the separation wall 17, 18 are provided with means generally known to the man skilled in the art, for example an intermating recess and protrusion, which are provided to engage each other.

The coupling sleeve 22 is preferably hollow and has an open upper side 24 and bottom 25. The wall 26 of the coupling sleeve 22 is preferably provided with perforations 11 in order to allow the containers 1, 10 to be irrigated from the inside.

The assembly according to the invention further preferably also comprises a tube 21, which is provided to be applied into the coupling sleeve 22, as is shown in figure 2. This tube 21 is provided for the further strengthening of the assembly. The tube 21 can preferably be moved into and out of the coupling sleeve. The tube 21 and the coupling sleeve 22 are for example substantially cylindrical. Thereby, the diameter of the tube 21 is adjusted in such a way to the diameter of the coupling sleeve 22, that between them a small space 27 remains in which a water film may be formed.

The coupling sleeve 22 of the upper container is preferably provided to be connected to the water supply system for the irrigation of the assembly from the top down. Because the space between the coupling sleeve 22 and the tube 21 is small, the water only slowly flows down, and both the upper container 10 and the lower container 1 may be irrigated through the perforations.

The assembly according to the invention may further also comprise a supporting foot 23 for anchoring the assembly. The foot 23 may be provided with an opening to receive the tube 21.

When setting up the assembly according to the invention, preferably the foot 23 is previously applied to the ground. The first container 1 is placed on the foot 23, filled with gardening soil, after which the plants are put in, along the upper edge 5 of the first container 1 (see figure 2). Subsequently, a second container 10 is fitted in the same way onto the first container 1. Thereby, the plants are preferably applied in such a way that they fill the space remaining between the upper edge 5 of the first container and the wall 12 of the second container. Thereby, the wall 12 of the second container 10 is substantially completely surrounded by plants, so that this wall 12 after some time will hardly be visible any more. In the same way, additional containers may be fitted onto the second container.

It is also possible to put in plants after the second container 10 has been placed onto the first 1. It is also possible to fit first the desired number of containers on top of each other, then to fill the containers with growth medium, after the second container 10 has been fitted, and then to put in the plants. The man skilled in the art will generally chose the process offering the best prospects of success for obtaining the desired result, a.o. depending on the nature of the plants which have to be put into the assembly.

In the assembly of two containers shown in figure 3, the first and second containers have substantially the same shape, and the size of containers fitted on top of each other transversely decreases with increasing height. This allows to imitate a plant of which the size diminishes as a function of the height, thus to imitate a tapering plant.

As is shown in figure 4, it is possible to fit containers having substantially the same size on top of each other, if the upper side of the containers is larger than the bottom. This allows, a.o. to imitate a plant of which the size in transverse direction remains constant as a function of the height.

It is also possible to have the diameter or breadth of the plant increase with increasing height. This may be realised by fitting containers on top of each other, of which the diameter or breadth is increasing with increasing height of the assembly. Thereby, it should always be taken into account that the upper side of the lower container should be larger than the bottom of the upper container, so that an open space remains availabe to receive plants.

In an analogous way, several containers may be fitted with respect to each other in order to obtain an assembly, and ultimately a plant with a pre-determined shape.

### List of used references

1. container
2. wall
3. upper side
4. bottom
5. upper edge
6. lower edge
7. open edge
8. inner space
9. height axis
10. second container
11. perforation
12. wall
13. upperside
14. bottom
15. upper edge
16. lower edge
17. separation wall
18. separation wall
19. height axis
20. recess
21. tube
22. coupling sleeve
23. foot
24. upper side of coupling sleeve
25. lower side of coupling sleeve
26. wall of coupling sleeve
27. space for water film
28. perforation
29. side
30. lip

## Claims

1. Assembly of a first and a second container for manufacturing a plant composition, whereby the first container comprises a first inner space for receiving growth medium for plants, which first inner space is enclosed by a first wall with a first upper edge for defining a first upper side and a first lower edge for defining a first bottom of the first container, which second container comprises a second inner space for receiving growth medium for plants, which second inner space is enclosed by a second wall with a second upper edge for defining a second upper side and a second lower edge for defining a second bottom of the second container, characterised in that the second bottom has a smaller surface area than the first upper side, whereby the second container is provided to be placed with respect to the first container in such a way that the second upper side of the second container is located above the first upper side of the first container, and the second bottom of the second container is enclosed by the first wall of the first container, and a portion of the first upper side, which is located between the first and second walls, is open along the first upper edge.

2. Assembly according to claim 1, characterised in that the first and second bottom have a smaller surface area than the first and second upper sides respectively.

3. Assembly according to claim 1 or 2, characterised in that in the inner space of said first container means connected to the first wall are provided for supporting the second container.

4. Assembly according to claim 3, characterised in that said means comprise a vertically fixed separation wall for connecting opposite parts of the wall of the container, whereby the separation wall has a height which is smaller than or equal to the height of the wall.

5. Assembly according to claim 4, characterised in that the separation wall is removably connectable with the wall.

6. Assembly according to any of claims 1 to 5, characterised in that said first and second containers are provided with a coupling sleeve for positioning the containers with respect to each other.

7. Assembly according to claim 6, characterised in that said coupling sleeve is hollow and has a wall which is provided with perforations.

8. Assembly according to claim 7 or 8, characterised in that the separation wall is removably connectable to the coupling sleeve.

9. Assembly according to any of claims 1 to 8, characterised in that said assembly also comprises a tube which is provided to be applied in said coupling sleeve.

10. Container as a part of an assembly according to any of claims 1 to 9.
